# EUROPEAN PATENT APPLICATION

(11) **EP 4 530 018 A1**
(43) Date of publication of application: **02.04.2025**
(21) Application number: 24203188.8
(22) Date of filing: 27.09.2024
(51) Int. Cl.: B24C 1/04, F01D 25/28, F01D 5/00, B05B 12/20

(54) **ADDITIVELY MANUFACTURED MASKING SYSTEM**

(30) Priority: 29.09.2023 US 202318478126
(71) Applicant: Chromalloy Gas Turbine LLC, Palm Beach Gardens, Florida 33410 (US)
(72) Inventor: HOPKINS, Zachary, San Diego, California, 92111 (US); ORAS, Zachary, Riverview, Florida, 33578 (US); MITCHELL, Logan, Palm Beach Gardens, Florida, 33410 (US)
(74) Representative: AWA Denmark A/S

(57) **Abstract**

A masking system is provided for masking a component for a media blasting process. The masking system has a first portion and a second portion that are each additively manufactured. The first portion has a retaining portion, a handling portion, and a receiving member. The retaining portion has a seating area. The receiving member is configured to operably receive a fluid dispensing device. The second portion has a second retaining portion including a second seating area. The second portion is configured to be secured to the first portion such that the component is seated within the seating area and the second seating area and at least a portion of the component is masked by the first portion and the second portion.

## Description

### TECHNICAL FIELD

The disclosure relates generally to the field of masking systems. More specifically, the disclosure relates to an additively manufactured masking system for masking a part for a media blasting process, as indicated in the preamble of claim 1. Masking systems are known, e.g., from US 2014/0242278 and EP 2 434 102 B1.

### BACKGROUND OF THE DISCLOSURE

A gas turbine engine typically includes a multi-stage compressor coupled to a multi-stage turbine via an axial shaft. Air enters the gas turbine engine through the compressor where its temperature and pressure are increased as it passes through subsequent stages of the compressor. The compressed air is then directed to one or more combustors where it is mixed with a fuel source to create a combustible mixture. This mixture is ignited in the combustors to create a flow of hot combustion gases. These gases are directed into the turbine causing the turbine to rotate, thereby driving the compressor. The output of the gas turbine engine can be mechanical thrust via exhaust from the turbine or shaft power from the rotation of an axial shaft, where the axial shaft can drive a generator to produce electricity.

The compressor and turbine each include a plurality of rotating blades and stationary vanes having an airfoil extending into the flow of compressed air or flow of hot combustion gases. Each blade or vane has a particular set of design criteria which must be met to provide the necessary work to the flow passing through the compressor and the turbine. However, due to the severe nature of the operating environment, especially in the turbine, it is often necessary to cool these blades and vanes. The blades and vanes often utilize complex internal cooling passageways in order to maximize the efficiency of cooling fluid passing therethrough.

### BRIEF SUMMARY OF INVENTION

The present invention is defined in claim 1. The following presents a simplified summary of the invention in order to provide a basic understanding of some aspects of the invention. This summary is not an extensive overview of the invention. It is not intended to identify critical elements of the invention or to delineate the scope of the invention. Its sole purpose is to present some concepts of the invention in a simplified form as a prelude to the more detailed description that is presented elsewhere herein.

In an aspect of the disclosure, a masking system for masking a component for a media blasting process is provided. The masking system has a first portion and a second portion that are each additively manufactured. The first portion has a retaining portion, a handling portion, and a receiving member. The retaining portion has a seating area. The receiving member is configured to operably receive a fluid dispensing device. The second portion has a second retaining portion including a second seating area. The second portion is configured to be secured to the first portion such that the component is seated within the seating area and the second seating area and at least a portion of the component is masked by the first portion and the second portion.

In an aspect, according to any one of the preceding aspects, the first portion and the second portion are each additively manufactured with an elastomeric material.

In an aspect, according to any one of the preceding aspects, the seating area and the second seating area are collectively configured to retain the component only in one component orientation.

In an aspect, according to any one of the preceding aspects, the retaining portion includes an outer section having a channel.

In an aspect, according to any one of the preceding aspects, the second retaining portion includes a second outer section having a second channel.

In an aspect, according to any one of the preceding aspects, when the first portion is secured to the second portion, the channel and the second channel are coplanar.

In an aspect, according to any one of the preceding aspects, one of the first portion and the second portion includes a locking member.

In an aspect, according to any one of the preceding aspects, the locking member is configured to be received within a recess of the other of the one of the first portion and the second portion that includes a locking member.

In an aspect, according to any one of the preceding aspects, the first portion includes a ridge and the second portion includes an indentation that corresponds to the ridge.

In an aspect, according to any one of the preceding aspects, the component is a blade of a gas turbine.

In an aspect, according to any one of the preceding aspects, the media blasting process is a grit blasting process.

In an aspect, according to any one of the preceding aspects, the receiving member is threaded and is situated within the handling portion.

In an aspect of the disclosure, an additively manufactured masking system for masking a blade for a media blasting process is provided. The masking system includes a first portion and a second portion securable to the first portion. The first portion and the second portion are configured to collectively retain the blade such that only target surfaces of the blade are exposed. The first portion and the second portion are each additively manufactured. The masking system is configured to operably receive a fluid dispensing device for dispensing a fluid during the media blasting process.

In an aspect, according to any one of the preceding aspects, the first portion and the second portion is each additively manufactured with an elastomeric material.

In an aspect, according to any one of the preceding aspects, the first portion is configured to be coupled to the second portion without use of any tools.

In an aspect of the disclosure, a method of masking a component includes obtaining an additively manufactured masking device having a first portion and a second portion. The method includes operably coupling a fluid dispensing device to the masking device. The method includes securing the first portion to the second portion such that the component is retained by the first portion and the second portion and only target surfaces of the component are exposed. The method includes operating the fluid dispensing device to dispense fluid into the component.

In an aspect, according to any one of the preceding aspects, the first portion and the second portion are additively manufactured using vat photopolymerization.

In an aspect, according to any one of the preceding aspects, the first portion includes a chamber having a receiving member for operably receiving the fluid dispensing device.

In an aspect, according to any one of the preceding aspects, the first portion and the second portion each have a respective recessed portion configured to collectively retain the component.

In an aspect, according to any one of the preceding aspects, the method includes media blasting the target surfaces while the fluid dispensing device dispenses fluid into the component.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

Illustrative embodiments of the present disclosure are described in detail below with reference to the attached drawing figures and wherein:
FIG. 1 is a perspective view of a turbine blade.
FIG. 2 is a perspective view of a masking system, according to some aspects of the disclosure.
FIG. 3 is a perspective view of the masking system of FIG. 2 with a blade for media blasting retained therein.
FIG. 4A is a perspective view of a first portion of the masking system of FIG. 2.
FIG. 4B is a front view of the first portion of the masking system of FIG. 2.
FIG. 4C is a rear view of the first portion of the masking system of FIG. 2.
FIG. 5 is a cross-sectional view taken along line 5-5 of FIG. 4B.
FIG. 6A is schematic illustrating operable coupling of a fluid dispensing device to the first portion of the masking system of FIG. 2.
FIG. 6B is a schematic illustrating media being blasted onto surfaces of a blade retained within the masking system of FIG. 2 while a fluid dispensing device dispenses fluid into the masking system.
FIG. 7A is a perspective view of a second portion of the masking system of FIG. 2.
FIG. 7B is a front view of the second portion of the masking system of FIG. 2.
FIG. 8A is a perspective view showing the masking system of FIG. 2 in a closed position.
FIG. 8B is a bottom view showing the masking system of FIG. 2 in the closed position.
FIG. 9 is a schematic showing another masking system, according to an aspect of the disclosure.
FIG. 10A is a perspective view of a first portion of the masking system of FIG. 9.
FIG. 10B is a perspective view of a second portion of the masking system of FIG. 9.
FIG. 11A shows a side view of a first locking member of the second portion of the masking system of FIG. 9 interlocking with a first recess of the first portion.
FIG. 11B shows a side view of a second locking member of the second portion of the masking system of FIG. 9 interlocking with a second recess of the first portion.
FIG. 12 is a flowchart illustrating a method of making and using the masking systems of FIG. 2 and FIG. 9.

### DETAILED DESCRIPTION

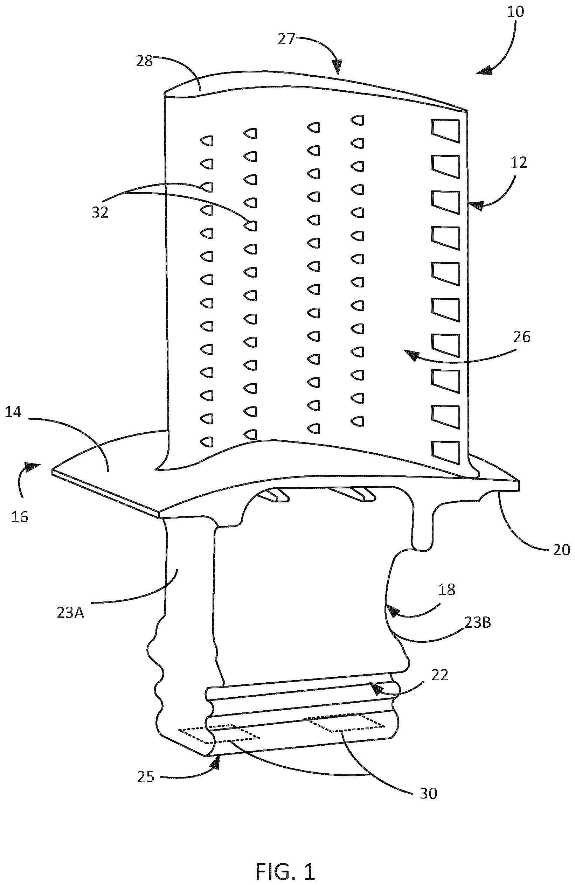

FIG. 1 shows a gas turbine component, such as a gas turbine blade 10. The turbine blade 10 generally includes an airfoil 12 extending from a top or gas path side surface 14 of a platform 16 and a root fixing portion or "dovetail" 18 depending from an undersurface 20 of the platform 16. The dovetail 18 may include one or more serrations or tangs 22 that extend laterally from one side 23A of the dovetail 18 to an opposing side 23B of the dovetail 18. The dovetail 18 may terminate at a terminal or bottom wall 25 that may span between the dovetail sides 23A and 23B. The dovetail 18, including the tangs 22 and the bottom wall 25 thereof, may be adapted for interlocking engagement in a corresponding slot defined in the periphery of a hub of a turbine rotor.

The airfoil 12 may have a pressure side 26, a suction side 27 opposite the pressure side 26, and a tip 28. The tip 28 may include or may be configured to interact with a shroud. The shroud may be provided at the tip 28 of each blade 10, or may be a stationary ring including one or more circumferentially extending sections each connected to the gas turbine casing, The shroud(s) may be configured to seal the gap between the tip of the blade 10 and the stationary components (e.g., the stators) of the turbine, and thereby, may reduce leakage flow between the rotating and stationary components. The airfoil 12, e.g., the pressure side 26 thereof, may come into contact with combustion gases that are at an extremely high temperature. The airfoil 12 or portions thereof may therefore be coated with heat-resistant coatings. During operation, the tip 28 may rub against the tip shroud, and the tip 28 may therefore additionally or alternately be coated with wear-resistant coatings. In like fashion, one or more other portions of the blade 10 may be coated with different materials depending on the environment in which these portions are located and the stresses encountered thereby.

The bottom wall 25 of the dovetail 18 may include one or more air inlet apertures 30. Further, one or more portions of the blade 10 may include cooling holes 32 for cooling the blade 10 during operation. The cooling holes 32 may be provided on one or more surfaces of the airfoil 12, such as the pressure side 26, the suction side 27, the leading edge, the trailing edge, or a combination thereof. The cooling holes 32 may be circular cooling holes, diffused (e.g., angled) cooling holes, cooling slots, or take on one or more other regular or irregular shapes. Cooling gas may pass through internal cooling channels (not illustrated for ease of description) in the blade 10 and emerge from the cooling holes 32 to create a blanket of thin film over the outer surface of the airfoil 12, thus preventing the direct contact of the hot gases and the surfaces of the blade 10. For example, the illustrated blade 10 has air inlet apertures 30 in the bottom wall 25 of the dovetail 18 and cooling holes 32 on the pressure side 26 of the airfoil 12. The blade 10, including the airfoil 12 thereof, may include hollow interior passages for the passage of cooling air, for example, but not limited to, from air inlet apertures 30 to cooling holes 32. Thus, cooling air may be bled from the compressor and channeled into the air inlet apertures 30. This air may exit out the cooling holes 32 to cool one or more portions of the blade 10 during operation. One having skill in the art will understand that different blades may have differing cooling schemes and that the inlet apertures 30 and cooling holes 32 in FIG. 1 are merely exemplary and not intended to be independently limiting.

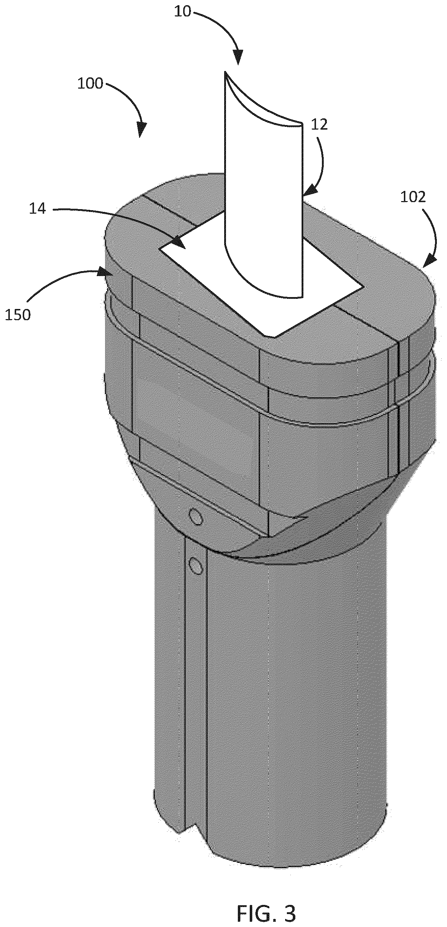

As noted, one or more portions of the blade 10 may be coated with heat-resistant, wear-resistant, and/or other suitable coatings. As one example, the airfoil 12 and the gas path side surface 14 of the platform 16 may be coated with one or more coatings. The surfaces of the airfoil 12 (i.e., the pressure side 26 and the suction side 27) and the gas path side surface 14 of the platform 16 may collectively be referred to herein as the "gas path surfaces" of the blade 10. To prepare these gas path surfaces of the blade 10 for downstream surface preparation, the gas path surfaces may be blasted with a media. The media may be one or more of a solid, liquid, or gas. In aspects, the media may be abrasive. For example, the media may be or may include sand or grit that is blasted onto the gas path surfaces with a jet of air. Alternatively, for example, grit or sand may be blasted onto the gas path surfaces with water. The abrasive media that is forcibly propelled at high pressure onto the gas path surfaces may clean these surfaces by removing any contaminants on these surfaces. In some examples, the media blasting may introduce texture to the gas path surfaces, which may facilitate the downstream surface preparation of these surfaces. For instance, the media blasting may remove paint, rust, sand, scale, or other contaminants from the gas path surfaces and activate or otherwise prepare these surfaces to receive a coating or a bonding agent. Such media blasting techniques may also be used to provide a smooth and aesthetically pleasing finish to the gas path surfaces of the blade 10. The surfaces of a component that are to be media blasted (i.e., those surfaces that are exposed to the media during a media blasting process) may be referred to herein as the "target surfaces" of the component. In the example illustrated in FIG. 3, the target surfaces of the blade 10 are the gas path surfaces thereof. In other examples, the target surfaces of a blade may be disparate from the gas path surfaces (e.g., may be a subset of the gas path surfaces or may be one or more other surfaces).

A component of a gas turbine, such as the blade 10 or a vane, may be media blasted one or more times during manufacture or repair. It is not uncommon for one or more portions of a blade or vane, such as one or more of the target surfaces thereof, to be media blasted between four to six times or more. When only a portion of the blade or vane is to be media blasted, the remainder of the blade or vane may be masked to reduce the likelihood that the media will impact the remaining surfaces of the blade or vane. For example, where the target surfaces are to be media blasted, an operator may mask the undersurface 20 of the platform 16 and the dovetail 18 with masking tape or shield these portions of the blade or vane with his or her hands. Alternately, the blade 10 or vane may be retained within a masking fixture configured to mask those portions of the blade 10 or vane that are not being media blasted.

These masking or shielding techniques may not effectively cover portions of the blade 10 or vane that are not being media blasted for the entire duration of the media blasting process. For example, covering portions of the blade 10 or vane (such as the undersurface 20 of the platform 16 and the dovetail 18) with masking tape or with the hands of an operator may leave one or more openings for the media to pass through and undesirably impact one or more of these blade 10 or vane portions. Further, considering the blade or vane may have many intricate features, techniques, such as molding used to manufacture masking fixtures, may not yield a masking fixture that is both economically feasible and which fully masks those portions of the blade or vane that are not being media blasted for the entire duration of the media blasting process.

Other masking or shielding techniques may not preclude the media from getting lodged into openings of the blade or vane. For example, as the airfoil 12 of the blade 10 is being sand or grit blasted, the sand or grit may get lodged in the cooling holes 32. After the media blasting process is complete, the airfoil 12 may be blasted with air in an attempt to dislodge any media stuck in the cooling holes 32. However, sand or grit particles may remain stuck in a cooling hole 32 or may get lodged in a different cooling hole 32. The sand or grit may damage the blade 10 and additional work may be required to address the damage and prepare the blade 10 for operation. If the blade 10 having sand or grit lodged in cooling holes 32 is operably coupled to a gas turbine, the blade 10 may overheat during operation, prematurely fail (e.g., melt), and cause substantial damage. It may be desirable to have a reusable masking system that effectually masks the non-target surfaces of the blade, vane, or other component, and ensures that media does not get lodged in the cooling holes or other openings or crevices of the blade, vane, or other component.

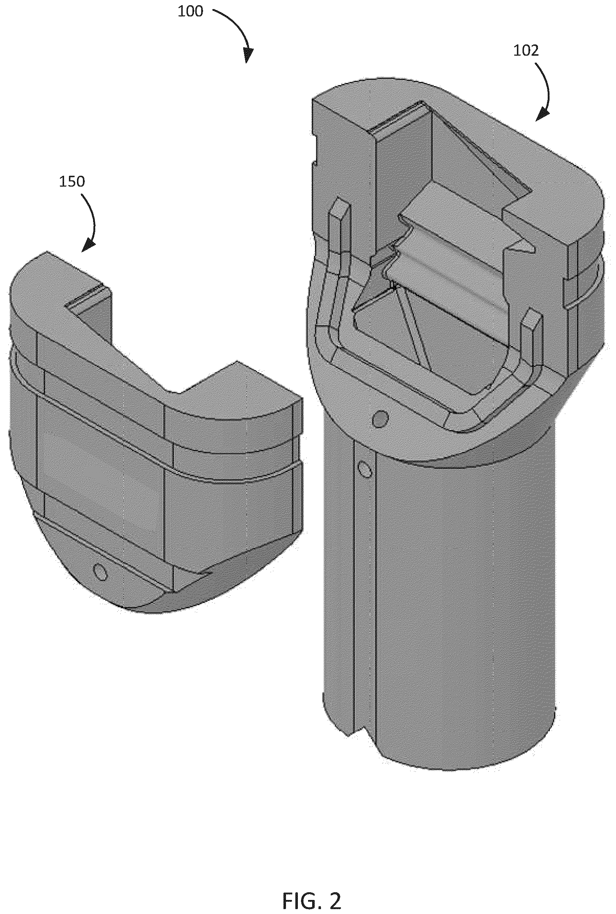

Focus is directed to FIG. 2, which shows a masking system 100, according to one aspect of the disclosure. The masking system 100 may also be referred to herein as the conformal masking system 100, the toolless masking system 100, or the boot 100 (hereinafter "masking system 100").

The masking system 100 may include a first portion (or a "base" or "receiver") 102 and a second portion (or a "cap" or "cover") 150. For purposes of discussion, assume that that the airfoil 12 of the blade 10 and the gas path side surface 14 of the platform 16, i.e., the target surfaces, are to be media blasted, and that the remainder of the blade 10, i.e., the non-target surfaces, are to be masked or shielded so as to protect these surfaces from being impacted by the media. As discussed herein, and shown in FIG. 3, the blade 10 may be retained within the masking system 100 such that only the target surfaces thereof are exposed to the media during a media blasting process. As also discussed herein, the masking system 100 may reduce or eliminate the likelihood that particles of the media get lodged in the blade 10, e.g., in the cooling holes 32 of the airfoil 12.

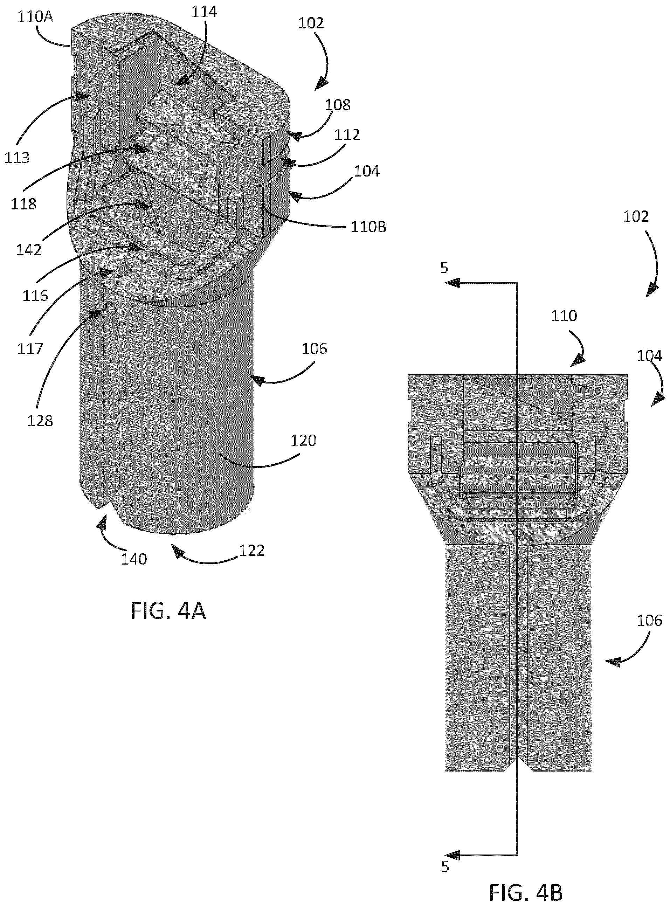

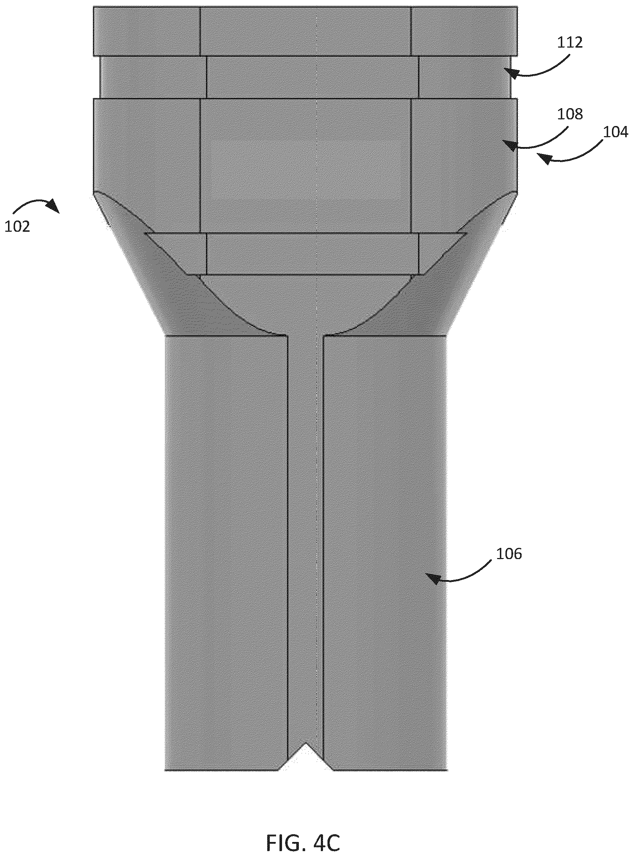

Figs. 4A, 4B, and 4C show the first portion 102 in more detail. The first portion 102 may have a retainer or retaining portion 104 and a handling portion 106. In aspects, the retaining portion 104 may be integral with the handling portion 106 and extend generally upwardly therefrom. The retaining portion 104 may be configured to facilitate retention of the blade 10 in the masking system 100, and the handling portion 106 may allow an operator to maneuver the masking system 100 as needed.

The retaining portion 104 may have an outer section 108 and an inner section 110 opposing the outer section 108. During a media blasting process, the outer section 108 of the retaining portion 104 may be exposed to the media whereas the inner section 110 may be shielded from the media. In aspects, the outer section 108 may be curved. In some examples, the outer section 108 may be generally semielliptical (see FIG. 4C) and may have a first end 110A and a second end 110B (see FIG. 4A). The outer section 108 may have a channel or recess 112 that extends from the first end 110A to the second end 110B.

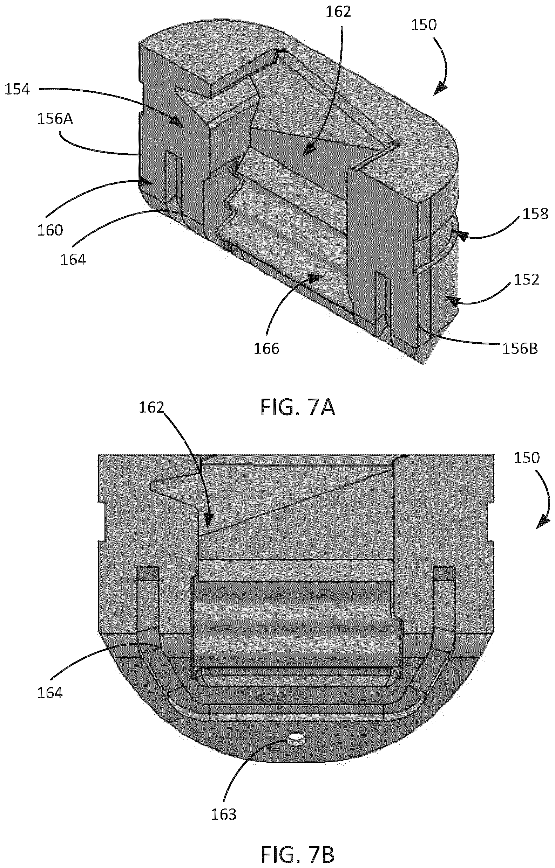

The inner section 110 may have a receiving or seating area 114 and an outboard portion 113 outboard of the seating area 114. In some examples, the outboard portion 113 may surround at least a part of the seating area 114. The outboard portion 113 may have a ridge 116. In some examples, the ridge 116 may be or may include one or more curved portions. For example, as in the illustrated example, ridge 116 may be generally U-shaped. In other examples, the ridge may take on other symmetrical or non-symmetrical shapes (e.g., the ridge may be spherical, a cuboid, a raised strip, et cetera). As discussed herein, the ridge 116 of the first portion 102 may be configured to mate with a corresponding complementary indentation (e.g., indentation 164, FIG. 7B) of the second portion 150. Thus, the ridge (e.g., ridge 116) may be any suitable component configured to associate with (e.g., geometrically interlock with) the corresponding complementary indentation (e.g., indentation 164). In some examples, the ridge may be provided on the second portion 150 and the corresponding indentation 164 may be provided on the first portion 102. An opening or hole 117 may be provided in the outboard portion 113 such that the curved ridge 116 is between the opening 117 and the seating area 114.

The seating area 114 may be generally recessed and may include one or more features or protruding members 118 (hereinafter "features 118") therein. The seating area 114 may be configured to receive or seat the dovetail 18 of the blade 10. The features 118 in the seating area 114 may generally correspond to serrations or tangs 22 of the dovetail 18 of the blade 10. For example, the features 118 may be configured to mate with the serrations or tangs 22 of the dovetail 18 on one side 23A of the dovetail 18 to an opposing side 23B of the dovetail 18.

The suction side of the dovetail 18 and the pressure side thereof may be asymmetric. In some examples, the features (such as the serration or tangs 22) on the suction side of the dovetail 18 may be distinct from the features (such as the serration or tangs 22) on the pressure side of the dovetail. For instance, the serration or tangs 22 on the suction side of the dovetail 18 may be shaped or arranged differently relative to the serration or tangs 22 on the pressure side of the dovetail 18. In some examples, the pressure side of the dovetail 18 may include one or more features absent from the suction side of the dovetail 18. In these examples, due to the asymmetry of the suction side of the dovetail 18 and the pressure side of the dovetail 18, the configuration of the seating area 114, including the features 118 thereof, may ensure that the dovetail 18 fits in the seating area 114 only in one orientation. That is, the seating area 114, including the features 118 thereof, may be configured to matingly receive the serration or tangs 22 on only one of the suction side and the pressure side of the dovetail 18.

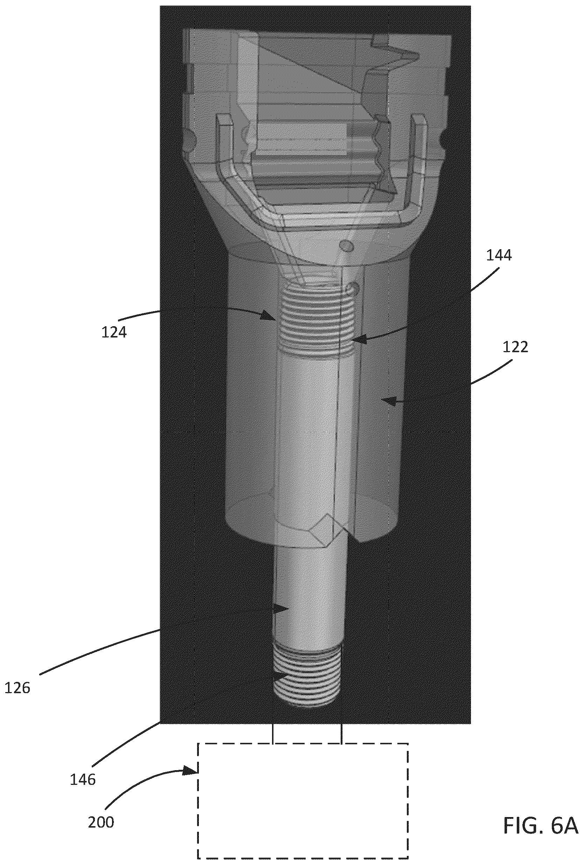

The handling portion 106 may have a wall 120. Wall 120 enables handling by an operator, cooperation with a fluid dispensing device 200 (FIG. 6A), connection to a mounting structure for blasting operations, or other handling structures, now known or hereinafter developed. For example, and not intending to limit the embodiments in any manner, wall 120 may be generally cylindrical. Alternatively, wall 120 may be polygonal or any other configuration that enables handling.

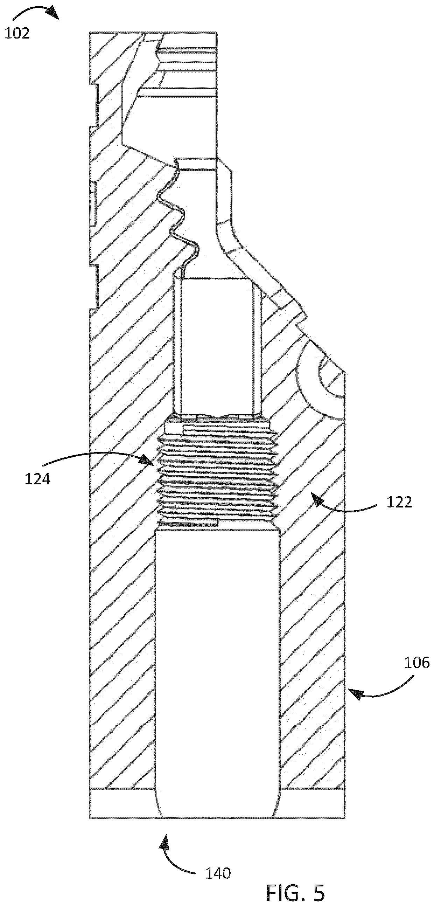

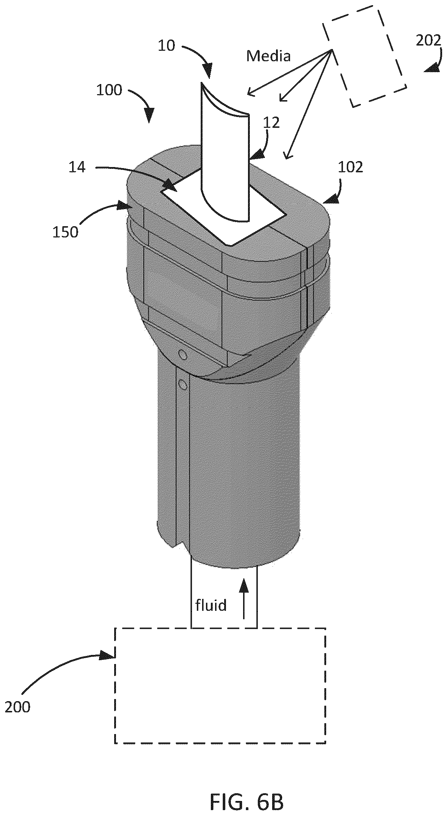

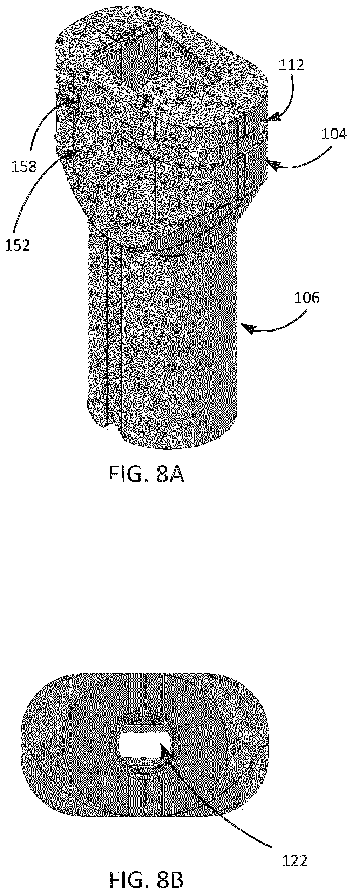

The wall 120 may have a hole or opening 128 (see FIG. 4A). In some examples, the handling portion 106 may be generally hollow. More specifically, the wall 120 may define an interior channel or chamber 122 (FIGs. 5 and 6; see also FIG. 8B). The chamber 122 may include a receiving member 124 (FIG. 5) configured to receive and retain an accessory 126 (FIG. 6A), such as a pipe, tube, or other conduit or device for conveying fluid from the fluid dispensing device 200 into the handling portion 106 (FIG. 6A). In some examples, the receiving member 124 may be threaded and may be configured to threadingly receive the accessory 126. In other examples, the receiving member 124 and accessory 126, may include, without limitation, bayonet couplings, interference fits, snap rings, and other couplings now known or hereinafter developed. In other examples still, the receiving member 124 and the accessory 126 may be adhesively secured, welded, or secured using other suitable means. Once the accessory 126 is coupled to the receiving member 124, the accessory 126 may extend from the receiving member 124 to outside the chamber 122.

Focus is directed now to FIGs. 7A and 7B which show the cap or second portion 150 in more detail. The second portion 150, like the retaining portion 104 of the first portion 102, may have an outer section 152 and an inner section 154. During a media blasting process, the outer section 152 may be exposed to the media whereas the inner section 154 may be shielded from the media.

The outer section 152 may be curved. In some examples, the outer section 152 may be generally semi-elliptical and may have a first end 156A and a second end 156B. In some examples, the outer section 152 may have a channel or recess 158 that extends from the first end 156A to the second end 156B. When the first portion 102 and the second portion 150 are coupled to each other as discussed herein, the channel 158 in the outer section 152 of the second portion 150 may be coplanar with the channel or recess 112 of the first portion 102.

The inner section 154 of the second portion 150 may have an outboard portion 160 and a receiving or seating area 162. In some examples, the outboard portion 160 may surround at least a part of the seating area 162. The outboard portion 160 may have an indentation 164. In some examples, the indentation 164 may have one or more curved portions, e.g., the indentation 164 may be generally U-shaped. In other examples, the indentation 164 may take on other symmetrical or non-symmetrical shapes (e.g., the indentation may be spherical, a cuboid, a recessed strip, et cetera). As discussed above, the ridge 116 of the first portion 102 may be configured to mate with the indentation 164 of the second portion 150. Thus, the indentation (e.g., indentation 164) may be any suitable component configured to associate with (e.g., geometrically interlock with) the ridge (e.g., ridge 116) to facilitate sealing securement of the first portion 102 and the second portion 150.

When the first portion 102 and the second portion 150 are coupled to each other, the ridge 116 of the first portion 102 may be received within the indentation 164 of the second portion 150 or otherwise lock (e.g., geometrically lock) therewith. An opening or hole 163 may be provided in the outboard portion 160 such that the indentation 164 is between the opening 163 and the seating area 162.

The seating area 162, like the seating area 114 of the first portion 102, may be generally recessed and may include one or more features or protruding members 166 (hereinafter "features 166"). As described above, the seating area 114 of the first portion 102 may be configured to receive the serrations or tangs 22 of dovetail 18 such that one of the suction side and the pressure side of dovetail 18 faces the seating area 114. The seating area 162, including the features 166 thereof, may be configured to receive serrations or tangs 22 of dovetail 18 such that the other of the suction side and the pressure side of the dovetail 18 faces the seating area 162. The features 166 of the seating area 162 may correspond to or be configured to mate with the tangs or serrations 22 on that side of the dovetail 18.

As one example according to the embodiments, the seating area 114, including the features 118 thereof, may be configured to receive and retain the dovetail 18 such that the pressure side of the dovetail 18 faces the seating area 114. Therefore seating area 162, including the features 166, may be configured to receive and retain the dovetail 18 such that the suction side of the dovetail 18 faces the seating area 114. In this manner, due to the suction and pressure sides of the dovetail 18 being asymmetrical, the dovetail 18 may be seated and retained within the seating area 114 of the first portion 102 and the seating area 162 of the second portion 150 only in one orientation.

In some aspects of the disclosure, the first portion 102 and the second portion 150 may be configured to retain the blade 10 such that when the first portion 102 and the second portion 150 are coupled to each other, only the target surfaces of the blade 10 are exposed. Thus, only the target surfaces of the blade 10 may be blasted with the media during a media blasting process. FIG. 8A shows the first portion 102 and the second portion 150 coupled to or otherwise associated with each other (without the blade 10, e.g., the dovetail 18 thereof, being held between the first portion 102 and the second portion 150). When the first portion 102 is coupled to the second portion 150, the curved ridge 116 (see FIG. 4A) of the first portion 102 may be received within the curved indentation 164 (see FIG. 7B) of the second portion 150. Further, the channel 158 in the outer section 152 of the second portion 150 may be coplanar with the channel 112 of the first portion 102. A suitably strong O-ring (not illustrated for ease of understanding) may be situated within the channel 112 and the channel 158 to lockingly secure the first portion 102 to the second portion 150. Alternately, a zip tie (e.g., a metal zip tie), an aircraft wire, a rubber coated wire, et cetera, may be situated within the channels 112 and 158 and used to secure the first portion 102 to the second portion 150. The recessed surfaces of the channel 112 and the channel 158 may ensure that the O-ring, zip tie, aircraft wire, or rubber coated wire (collectively, a locking piece) does not slip off the first portion 102 or the second portion 150 when the first portion 102 is secured to the second portion 150. In some examples, a zip tie, aircraft wire, rubber coated wire, or other suitable wire may be passed through the openings 117 and 128 (FIG. 4A) in the first portion 102 and the opening 163 (FIG. 7B) in the second portion 150 to preclude or curtail relative movement of the first portion 102 with respect to the second portion 150 and ensure effective masking of the non-target surfaces of the blade 10.

To retain the blade 10 in the masking system 100, the dovetail 18 of the blade 10 may be seated within the seating area 114 of the first portion 102 such that the features 118 correspond to or mate with the dovetail serrations or tangs 22 at one of the suction side or pressure side of the dovetail 18. The second portion or cap 150 may then be coupled to the first portion 102. When so coupled, the features 166 in the seating area 162 of the second portion 150 may correspond to or mate with the tangs 22 on the other side of the dovetail 18. The dovetail 18 may be sandwiched within the seating areas 114 and 162 such that only the target surfaces of the blade 10 are exposed and the non-target surfaces of the blade 10 are masked and protected from the media. The locking piece may be situated within the channels 112 and 158 to secure the first portion 102 and the second portion 150 such that the blade 10 is firmly secured within the seating areas 114 and 162. In some examples, a zip tie or other suitable wire may be passed through the openings 117, 128, and 163 to assure that the first portion 102 and the second portion 150 are firmly coupled to preclude contact of the media with the non-target surfaces of the blade 10.

In aspects of the disclosure, the first portion 102 and the second portion 150 may each be additively manufactured. In some examples, the first portion 102 and the second portion 150 may be manufactured using vat photopolymerization. Vat photopolymerization, such as stereolithography, direct light processing, continuous liquid interface production, solid ground curing, et cetera, is a category of additive manufacturing processes that create three dimensional objects by selectively curing material (e.g., resin or other photopolymers) through targeted light-activated polymerization. When exposed to certain wavelengths of light, the liquid photopolymers' molecules may rapidly bind together and cure into a solid state through a process called photopolymerization. The liquid photopolymer(s) may be held in a container or vat with the build platform partially submerged near the surface of the liquid. Using the information supplied by a CAD or other design file, the printer may direct a light source to selectively cure the liquid photopolymer into a solid layer. Then the build platform may then be re-submerged into the remaining resin and the process may be repeated for the next layers until the first portion 102 and/or the second portion 150 have fully printed.

In some aspects, the first portion 102 and the second portion 150 may be additively manufactured using elastomeric material or other compliant material having a low Young's modulus (e.g., a Young's modulus less than 10 gigapascals (GPa)) (collectively, "elastomeric material"). In some examples, the first portion 102 and the second portion 150 may be additively manufactured using material having a high failure strength and/or high abrasive resistivity so as to withstand the impact of the media during the media blasting process without degradation. For example, the first portion 102 and the section portion 150 may be additively manufactured using silicone, rubber, urethane, or other suitable materials. In some examples, the first portion 102 and the second portion 150 may be manufactured, e.g., additively manufactured, using disparate materials.

Additively manufacturing the masking system 100 using elastomeric material may provide one or more benefits over manufacturing the masking system 100 using conventional techniques (e.g., molding). Additively manufacturing the making system 100 using elastomeric material may ensure that the first portion 102 and the second portion 150 are sufficiently flexible and conform to the surfaces of the blade 10 being retained in the masking system 100. In some examples, additively manufacturing the first portion 102 and the second portion 150 with elastomeric material may ensure that the first portion 102 and the second portion 150 sealingly mate with each other while the dovetail 18 is retained therein, thereby ensuring that no media (e.g., grit or sand) comes into contact with the non-target surfaces of the blade 10. Moreover, additively manufacturing the masking system 100 may ensure manufacturing repeatability and consistent masking lines compared to other legacy methods. It may also be more economically feasible to manufacture intricate components, such as the first portion 102 and the second portion 150, using additive manufacturing relative to other conventional manufacturing processes.

In an example, the first portion 102 and the second portion 150 may be additively manufactured using silicone elastomers having a shore hardness in a range between about 50 and about 90A. In some examples, IND402 from Loctite^{®} may be used to additively manufacture the first portion 102 and the second portion 150. In other examples, elastomeric three-dimensional printable polymers (e.g., resins, pellets, filaments, powders, and printable polymers now known or hereinafter developed) that provide a minimum shore hardness of about 76A and a minimum tear strength of about 28 kN/m may be used to additively manufacture the first portion 102 and the second portion 150. Using elastomers with a shore hardness in a range between about 50 and about 90A and a minimum tear strength of about 28 kN/m may ensure that the first portion 102 and the second portion 150 are suitably flexible to conform to the non-target surfaces and yet are durable enough to withstand impact of the media. The masking system 100, made using such elastomers, may have exceptional abrasion resistance and may be reused numerous times to mask the blade 10 for media blasting operations.

Another benefit of additively manufacturing the masking system 100 using elastomeric material may be that the first portion 102 and the second portion 150 may be secured to each other while the blade 10 is retained therein without screws, nuts and bolts, or other such fasteners that require tools (such as screw drivers or pliers) for fastening. Masking systems that require screws, nuts and bolts, or other such fasteners (collectively, screws) have a high likelihood of being damaged if the screws are over-tightened, and conversely, may not effectively mask the non-target surfaces if the screws are not appropriately tightened. The toolless masking system 100, because of its design and elastomeric construction, may provide a conforming boot for selectively and effectively masking surfaces of the blade 10 for media blasting operations.

Yet another benefit of the masking system 100 compared to conventional masking techniques and systems may be that the masking system 100 may reduce or eliminate the likelihood of the media lodging in the cooling holes 32 or other portions of the blade 10 during the media blasting process. As noted, the wall 120 of the handling portion 106 may define a generally hollow chamber 122 that includes a receiving member 124. The chamber 122 may have a lower end 140 (see FIG. 5) that is open. On the opposing end, the chamber 122 may have an opening 142 (see FIG. 4A) that feeds into the seating area 114. In some examples, the accessory 126 (FIG. 6A) may be coupled (e.g., threadingly coupled or coupled via a quick connect or other means) to the receiving member 124 at one end 144 of the accessory 126.

In some examples, an opposing end 146 of the accessory 126 may be operably coupled to a fluid dispensing device 200 schematically shown in FIG. 6A. The fluid dispensing device 200 may be configured to dispense a fluid, such as air, water, mist, steam, or any fluid. In some examples, the fluid dispensing device 200 may be configured to dispense pressurized air or another gas. In some examples, the fluid dispensing device 200 may be an air compressor. The pressurized fluid may enter the accessory 126 from the fluid dispensing device 200 and exit the accessory 126 through the opening 142. Where the dovetail 18 is secured by the first portion 102 and the second portion 150, the pressurized fluid may exit through the opening 142, enter the blade 10 via the air inlet apertures 30 (FIG. 1), and exit via the cooling holes 32. The fluid may thus create a positive pressure within the blade 10 and serve to create a protective film about the airfoil 12. During a media blasting process, as media (e.g., sand or grit) is blasted onto the blade 10 using a media blasting device, the media may be precluded from lodging in holes in the blade 10 (e.g., in the cooling holes 32) due to the pressurized fluid that is fed into the blade 10 by the fluid dispensing device 200. For example, the fluid dispensed by the fluid dispensing device 200 into the accessory 126 may enter the blade 10 via the air inlet apertures 30 and may exit the cooling holes 32 at sufficient positive pressure so as to preclude media from getting lodged into the cooling holes 32 during the media blasting process or thereafter. In this manner, the target surfaces of the blade 10 may be repeatedly media blasted without incurring damage from media that may otherwise have been lodged inside the blade 10. FIG. 6B illustrates a media blasting device 202 blasting media onto the target surfaces of the blade 10 retained within the mounting system 100 while the fluid dispensing device 200 dispenses pressurized fluid to preclude media from getting lodged in the blade.

In some embodiments, the accessory 126 may be additively manufactured. In some examples, the accessory 126 may replace all or part of the handling portion 106 (for example, the accessory 126 may be additively manufactured and form the base for the additively manufactured retaining portion 104 of the first portion 102). The accessory 126 may be any accessory configured or operable to convey pressurized fluid to the blade 10 (e.g., via the opening 142 in the retaining portion 104) so as to ensure that the media from the media blasting process does not get lodged in the cooling holes 32 or other openings of the blade 10.

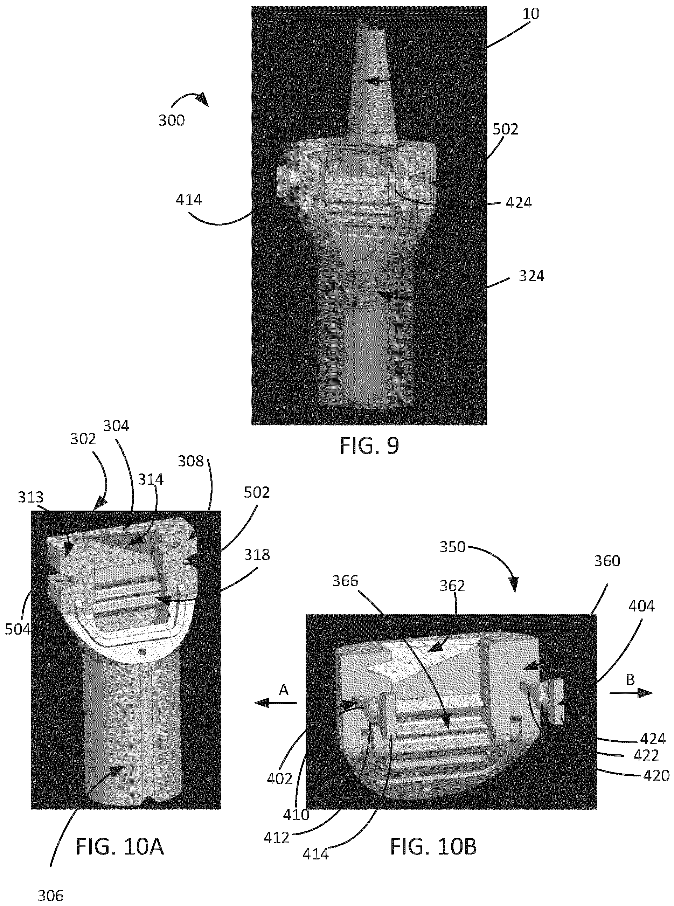

FIG. 9 shows a masking system 300 in another aspect of the disclosure. The masking system 300 may be similar to masking system 100, except as noted. Corresponding parts may be denoted with corresponding reference numerals, though with any noted deviations.

The masking system 100 discussed above may include a first portion 102 and a second portion 150 that collectively retain the blade 10 such that the non-target surfaces of the blade 10 are masked and protected from media during a media blasting process. As discussed, the first portion 102 includes a seating area 114 having features 118 and the second portion 150 includes a seating area 162 having features 166. The first portion 102, e.g., the receiving member 124 in the handling portion 106 thereof, may allow the fluid dispensing device 200 to be operably coupled to the masking system 100.

The masking system 300 may likewise include a first portion 302 (see FIG. 10A) and a second portion 350 (see FIG. 10B) that collectively retain the blade 10 such that the surfaces of the blade 10, other than the target surfaces thereof, are masked and protected from media during a media blasting process. The first portion 302, like the first portion 102, may include a retaining portion 304 and a handling portion 306. Further, like the retaining portion 104 of the first portion 102 and the second portion 150, the retaining portion 304 of the first portion 302, and the second portion 350, may respectively include seating areas 314 and 362 having features 318 and 366. The seating areas 314 and 362 may be configured to receive the blade 10, e.g., the dovetail 18, only in one orientation. For example, as discussed above for masking system 100, the suction and pressure sides of the dovetail 18 may be asymmetric, and each of the seating areas 314 and 362 may be configured to matingly receive only one of the suction side and the pressure side of the dovetail 18. The first portion 302, akin to the first portion 102, may have a handling portion 306. The handling portion 306, e.g., a receiving member 324 thereof, may allow the fluid dispensing device 200 to be operably coupled to the masking system 300. For example, an accessory (such as accessory 126) may be used to operably couple the fluid dispensing device 200 to the first portion 302. As described above for masking system 100, in some examples, the accessory 126 may be additively manufactured, and may form a base for a retaining portion 304 of the first portion 302.

A difference between masking system 100 and masking system 300 may relate to the way in which the first portion 302 and second portion 352 are secured to each other to retain the blade 10. Specifically, the second portion 150 of the masking system 100 may include a seating area 162 and an outboard portion 160 outboard the seating area 162. The second portion 350 of the masking system 300 may likewise include a seating area 362 and an outboard portion 360 outboard the seating area 362. Unlike the outboard portion 160, however, the outboard portion 360 of the second portion 350 may include one or more locking members that extend generally horizontally from the outboard portion 360. For example, as shown in FIGs. 9 and 10B, locking members 402 and 404 extend from the outboard portion 360 of the second portion 350. In some examples, the locking member 402 may extend from the outboard portion 360 on one side of the receiving area 362 and the locking member 404 may extend from the outboard portion 360 on the other side of the receiving area 362. In other examples, one or more locking members may extend from the receiving area 362 or may be disposed elsewhere on the second portion 350. In some examples, a solitary locking member or more than two locking members may be provided on the second portion 350. One or more of the locking members (e.g., the locking members 402 and 404) may be configured to secure or facilitate securement of the second portion 350 to the first portion 302. For example, as discussed herein, the locking members 402 and 404 may geometrically interlock with corresponding features in the first portion 302, e.g., in the outboard portion 313 thereof.

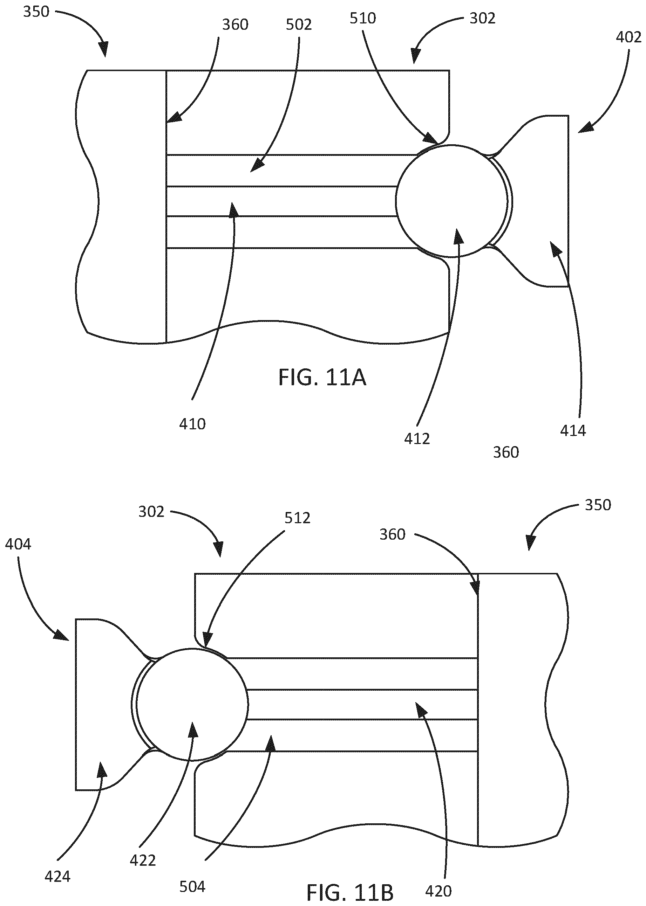

In some aspects of the disclosure, and as shown in FIG. 11A, the locking member 402 may have a horizontal member 410 that extends generally horizontally from the outboard portion 360, a spherical member 412 that extends from the horizontal member 410, and a vertical member 414 that extends from the spherical member 412. In some examples, the locking member 404 may be generally identical to the locking member 402. Specifically, as shown in FIG. 11B, the locking member 404 may have a horizontal member 420 that extends generally horizontally from the outboard portion 360, a spherical member 422 that extends from the horizontal member 420, and a vertical member 424 that extends from the spherical member 422

As discussed above, the masking system 100 may be additively manufactured using elastomeric material. The masking system 300 may be additively manufactured using like material. The elastomeric construction of masking system 300 incudes additively manufacturing locking members 402 and 404, which may allow both locking members 402 and 404 to be temporarily pulled away from the seating area 362 in opposite directions. For example, the locking member 402 may be pulled in a direction A (FIG. 10B) and the locking member 404 may be pulled in an opposing direction B. The locking members 402 and 404 may elastically snap back or otherwise return to or towards their original position once the pulling force is removed.

The first portion 102 of the masking system 100 may have a seating area 114 and an outboard portion 113 that partially surrounds the seating area 114. The first portion 302, like the first portion 102, may likewise have a seating area 314 and an outboard portion 313 that partially surrounds the seating area 314. Unlike the outboard portion 113, the outboard portion 312 may have a recessed portion 502 on one side of the seating area 314 and a recessed portion 504 on the other side of the seating area 314 (FIGs. 10A, 11A, and 11B). The recessed portion 502 may be configured to lockingly accept the locking member 402 and the recessed portion 504 may be configured to locking accept the locking member 404. For example, as shown in FIG. 11A, the recessed portion 502 of the first portion 302 may include a curved portion 510 configured to accept the spherical member 412 of the locking member 402 of the second portion 350. Similarly, as shown in FIG. 11B, the recessed portion 504 of the first portion 302 may include a curved portion 512 configured to accept the spherical member 422 of the locking member 404 of the second portion 350. When the first portion 302 is to be coupled to the second portion 350 after the dovetail 18 is seated in the seating area 314, the locking members 402 and 404 may be respectively pulled in direction A and direction B; the locking members 402 and 404, because of their elastomeric construction, may travel towards their original position and mate (e.g., geometrically interlock) with the recessed portions 502 and 504, respectively. In this manner, the first portion 302 and the second portion 350, with the blade 10 retained therein, may be secured (e.g., sealingly secured) to each other for a masking operation. To unlock the system 300, a user may employ the vertical members 414 and 424 to respectively pull each locking member 402 and 404 away from the recessed portions 502 and 504. The locking members 402 and 404 may thereby be disassociated form the recessed portions 502 and 504, respectively, to uncouple the first portion 302 from the second portion 350.

While FIG. 10B shows a particular configuration of locking members 402 and 404, one having skill in the art will understand that such is merely exemplary. The second portion 350 may have any locking member that can be used to secure the first portion 302 to the second portion 350. For example, the second portion 350 may have a spherical locking member, a pyramidal locking member, a clasp, a hook, or any other symmetrical or asymmetrical locking member, now known or subsequently developed, that may be employed to secure the first portion 302 and the second portion 350. In some embodiments, the locking member may alternately or additionally be provided on the first portion 302. In some examples, locking members 402 and 404 on one of the first portion 302 and the second portion 350 may be configured to geometrically interlock with the other of the first portion 302 and the second portion 350.

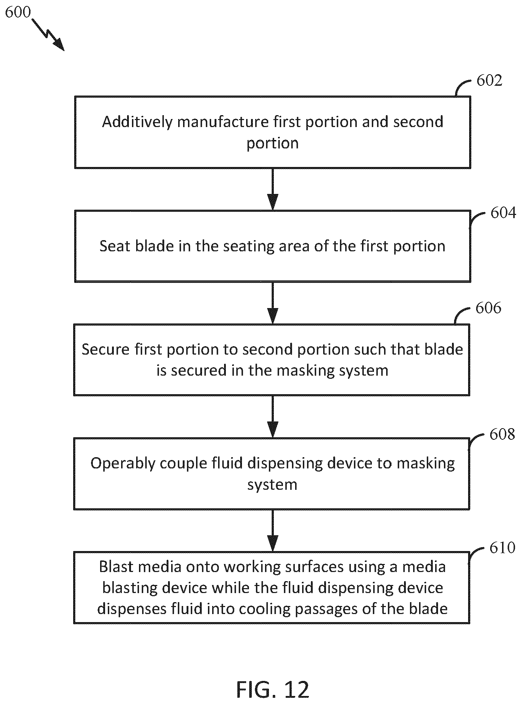

FIG. 12 is a flowchart illustrating a method 600 for making and using the masking system, such as the masking system 100 and/or the masking system 300, for a masking operation. At block 602, the first portion and the second portion may be additively manufactured using elastomeric material. In some examples, the first portion may be additively manufactured separately from the second portion. At block 604, the blade 10 may be seated within the seating area of the first portion. At block 606, the second portion may be secured to the first portion such that the blade 10 is securely retained within the masking system and only the target surfaces thereof are exposed. At block 608, a fluid dispensing device may be operably coupled to the masking system. At block 610, a media blasting device may be used to blast media onto the target surfaces while the fluid dispensing device dispenses fluid into the cooling passages of the blade.

Thus, as has been described, the masking system (e.g., the masking system 100 and the masking system 300) may provide a conforming boot that protects non-target surfaces during a media blasting process and ensures that media does not get lodged into the cooling holes of the blade.

One having skill in the art will appreciate from the disclosure herein that grit or sand blasting is merely one media blasting technique, and that aspects of the disclosure also may be used with other media blasting techniques (such as shot peening, glass bead blasting, et cetera). Further, while the disclosure focuses on gas turbine components, such as blades and vanes thereof, one having skill in the art will understand that the techniques described herein may be used to retain and media blast other suitable components.

Many different arrangements of the various components depicted, as well as components not shown, are possible without departing from the spirit and scope of the present disclosure. Embodiments of the present disclosure have been described with the intent to be illustrative rather than restrictive. Alternative embodiments will become apparent to those skilled in the art that do not depart from its scope. A skilled artisan may develop alternative means of implementing the aforementioned improvements without departing from the scope of the present disclosure.

It will be understood that certain features and subcombinations are of utility and may be employed without reference to other features and subcombinations and are contemplated within the scope of the claims. Not all steps listed in the various figures need be carried out in the specific order described.

## Claims

1. A masking system (100) for masking a component (10) for a media blasting process, the masking system comprising:
a first portion (102), the first portion (102) being additively manufactured and having a retaining portion (104), a handling portion (106), and a receiving member (124), the retaining portion (104) having a seating area (114), the receiving member (124) configured to operably receive a fluid dispensing device (200); and
a second portion (150), the second portion (150) being additively manufactured and having a second retaining portion (154) including a second seating area (162), the second portion (150) configured to be secured to the first portion (102) such that the component (10) is seated within the seating area (114) and the second seating area (162) and at least a portion of the component (10) is masked by the first portion (102) and the second portion (150).

2. The masking system of claim 1, wherein the first portion (102) and the second portion (150) are each additively manufactured with an elastomeric material.

3. The masking system of claim 1, wherein the seating area (114) and the second seating area (162) are collectively configured to retain the component (10) only in one component orientation.

4. The masking system of claim 1, wherein the retaining portion (104) includes an outer section (108) having a channel (112).

5. The masking system of claim 4, wherein the second retaining portion (154) includes a second outer section (152) having a second channel (158).

6. The masking system of claim 5, wherein when the first portion (102) is secured to the second portion (150), the channel (112) and the second channel (158) are coplanar.

7. The masking system of claim 1, wherein one of the first portion (102) and the second portion (150) includes a locking member (402).

8. The masking system of claim 7, wherein the locking member (402) is configured to be received within a recess (502) of the other of the one of the first portion (102) and the second portion (150) that includes a locking member (402).

9. The masking system of claim 1, wherein the first portion (102) includes a ridge (116) and the second portion (152) includes an indentation (164) that corresponds to the ridge (116).

10. The masking system of claim 1, wherein the component is a blade (10) of a gas turbine.

11. The masking system of claim 1, wherein the media blasting process is a grit blasting process.

12. The masking system of claim 1, wherein the receiving member (124) is situated within the handling portion (106).
